Europäisches Patentamt

European Patent Office

Office européen des brevets

(11) Publication number: **0 039 504**
**B1**

# (12) EUROPEAN PATENT SPECIFICATION

(45) Date of publication of patent specification: **14.08.85**

(21) Application number: **81103357.0**

(22) Date of filing: **04.05.81**

(51) Int. Cl.⁴: **B 01 D 53/04,** B 01 D 53/26, G 01 N 27/22

(54) Adsorbent fractionator with automatic cycle control and process.

(30) Priority: **02.05.80 US 145938**

(43) Date of publication of application:
**11.11.81 Bulletin 81/45**

(45) Publication of the grant of the patent:
**14.08.85 Bulletin 85/33**

(84) Designated Contracting States:
**AT BE CH DE FR GB IT LI NL SE**

(56) References cited:
DE-A-2 536 778
US-A-2 703 628
US-A-3 448 561
US-A-4 038 050

(73) Proprietor: **PALL CORPORATION**
**Glen Cove New York 11542 (US)**

(72) Inventor: **Gravatt, Barton A.**
**One Hooker Avenue**
**Homer New York 13077 (US)**

(74) Representative: **Weinhold, Peter, Dr. et al**
**Patentanwälte Dr. V. Schmied-Kowarzik Dipl.-**
**Ing. G. Dannenberg Dr. P. Weinhold Dr. D. Gudel**
**Dipl.-Ing. S. Schubert Grosse Eschenheimer**
**Strasse 39**
**D-6000 Frankfurt am Main 1 (DE)**

Courier Press, Leamington Spa, England.

## Description

Desiccant dryers have been marketed for many years and are in wide use throughout the world. The usual type is made up of two desiccant beds, one of which is being regenerated while the other is on the drying cycle. The gas to be dried is passed through the one desiccant bed in one direction in the drying cycle, and then, at a predetermined time interval, when the desiccant can be expected to have adsorbed so much moisture that there is a danger that the required low moisture level of the effluent gas will not be maintained, the influent gas is switched to the other bed, and the spent bed is regenerated by heating and/or by evacuation and/or by passing dry purge gas therethrough usually in counterflow.

Desiccant dryers on the market today are of two general types, a heat-reactivatable type, in which heat is applied to regenerate the spent desiccant at the conclusion of the drying cycle, and a heaterless dryer, in which heat is not applied to regenerate the spent desiccant at the conclusion of the drying cycle, but which relies upon the use of a purge flow of dry gas, usually effluent gas from the bed on the drying cycle, which is passed through the spent bed at a lower pressure, with rapid cycling to conserve the heat of adsorption to aid in the regeneration of the spent bed. The use of a purge gas to regenerate at a lower pressure than the line pressure of the gas being dried is not, however, confined to heaterless dryers, but was used in heat-reactivated desiccant dryers for many years before the advent of the heaterless type.

Both types of dryers are operated with fixed time drying and regenerating cycles, usually equal in duration, with the length of the cycles being fixed according to the volume of desiccant available and the moisture content of the influent air. The time of the cycle is invariably fixed at much less time than might be permitted, in order to ensure that the moisture content of the effluent gas will always meet the system requirements. As the drying cycle proceeds, the desiccant bed becomes progressively more and more saturated from the inlet end towards the outlet end, and less and less capable of adsorbing moisture that is carried through it by the influent gas. Removal of moisture from the influent gas depends upon the rate of flow of the gas and the rate of moisture adsorption and moisture content of the adsorbent, as well as the temperature and pressure of gas within the bed. The rate of adsorption by the desiccant may decrease as the desiccant becomes loaded. Since the moisture content of an influent gas is rarely constant, the demand put upon the desiccant bed can vary, sometimes rather rapidly, and sometimes within rather wide limits. Consequently, a fixed time drying cycle must always be short enough to give a safe margin for moisture removal at maximum moisture content of the influent gas, and this means that frequently a fixed time cycle must be rather short, to be sure it is ended before the available remaining moisture capacity of the bed reaches too low a level. This means, of course, that in the average cycle, the moisture capacity of the bed may not be well utilized.

The life of a desiccant that is heated in order to regenerate it is to a considerable extent dependent upon the frequency of regeneration. It is a rule of thumb in the trade that a desiccant bed is good for a certain number of regenerations, and no more. Obviously, then, the effective life of a bed is shortened unnecessarily, whenever during each drying cycle the moisture capacity is not effectively utilized. Furthermore, the inability to achieve a full utilization of the effective bed capacity during each drying cycle, both in the case of heat-reactivated and heaterless dryers, means that the volume of the desiccant bed must be more than what might be required, to provide the reserve capacity needed to adsorb extreme but occasional moisture levels of the influent gas during the fixed time period of the drying cycle.

Inefficient utilization of moisture capacity also leads to a considerable waste of purge gas with each cycle. Purge gas is normally bled off from the effluent gas, for the purpose of regeneration of a spent bed, and correspondingly reduces the yield of effluent. Each time a bed is transferred from the drying cycle to the regenerating cycle, a volume of purge gas equal to the open volume of the bed vessel is necessarily dumped, and lost. Short cycling means higher purge losses than long cycling.

Such losses are particularly severe in the case of heaterless dryers, which require much more frequent cycling. Indeed, the choice between a heat-regenerated and a heaterless dryer frequently is dictated by the frequency of recycling required. Skarstrom in U.S. Patent No. 2,944,627, dated July 12, 1960, describes a type of heaterless dryer which purports to represent an improvement on those described some years earlier by Wynkoop, U.S. Patent No. 2,800,197, dated July 23, 1957, and in British Patents Nos. 633,137 and 677,150. Skarstrom showed that by very rapid cycling between adsorption and desorption in the respective zones, the desorption cycle could effectively utilize the heat of adsorption for regeneration of spent desiccant. Skarstrom accordingly taught the use of times in the adsorption cycle not exceeding two to three minutes, preferably less than one minute, and very desirably less than twenty seconds. Such cycling times are of course shorter than Wynkoop's which was of the order of thirty minutes or higher, or the cycling times ranging from five minutes to thirty minutes, of British Patent No. 633,137. British Patent No. 677,150 demonstrated that the adsorption and desorption cycles need not necessarily be equal.

The drawback of the Skarstrom system, however, is the very considerable volume of purge gas lost with each cycle, and this loss is very much greater at a cycling time of, for instance, ten seconds, as compared to the British Patents' five to thirty minutes, and Wynkoop's thirty minutes or longer. In the short Skarstrom cycles, of course, the capacity of the desiccant bed is very little utilized, but when no heat is applied to effect regeneration of the desiccant, it becomes more important not to carry the moisture content of the adsorbent beyond a certain minimum on the adsorption cycle, or it will be impossible to effectively regenerate the adsorbent on the regeneration cycle.

Dryers have been provided with moisture detectors in the effluent line, to measure dewpoints in the effluent gas. Because of their slow response and relative insensitivity to low dewpoints, however, such devices have not been and cannot be used to determine the cycling of a dryer when an effluent of low dewpoint or relative humidity is desired, since by the time the detector has sensed moisture in the effluent the front has broken through the bed.

U.S. Patent No. 3,448,561, patented June 10, 1969 to Seibert and Verrando, provides a process and apparatus for drying gases which make it possible to effectively utilize the moisture capacity of a desiccant bed, by providing for regeneration thereof only when the moisture load on the bed requires it, and thus obtain optimum efficiency in use. During each adsorption cycle, the sorbent can be brought to the limiting moisture capacity at which regeneration can be effected under the available regenerating conditions, whether these be with or without the application of heat, and with or without the application of reduced pressure. This is made possible in accordance with the invention by detecting the advance of the moisture front within the bed, as evidenced by the moisture content of the gas being dried, and halting the drying cycle whenever the front has reached a predetermined point in the bed, short of breaking out of the bed. This can be done automatically by providing in the desiccant bed means for sensing the moisture content of the gas being dried, and means responsive to moisture content to halt the drying cycle whenever a predetermined moisture content in the gas being dried is reached at that point.

The advance of the moisture front in a bed of desiccant as it gradually adsorbs moisture is a well known phenomenon in the desiccant drying art, and is discussed in numerous patents, for example Skarstrom No. 2,944,627. During the greater part of the drying cycle, the sorbent efficiently sorbs moisture from gas passing over it. When the sorbent capacity of the desiccant approaches zero, however, the moisture content of gas passed over it rises, sometimes rather sharply. If moisture content, dewpoint or relative humidity of the gas be measured, and plotted against time, any rise in moisture content is noted, and if this rise be sudden, it can even be observed as a change in slope. In any case, the increasing moisture content of the effluent exceeds a predetermined minimum, and can rapidly approach the moisture content of the influent gas. The portion of this curve at the point where it exceeds the selected minimum moisture content in effect represents the moisture front, which can in the case of a change in slope assume an S-shape or some other shape, and if this be observed in terms of the length of the bed, it will be found to progress from the influent end to the effluent end of the bed as the adsorption cycle proceeds. The objective is to conclude the cycle before the moisture front or change in slope of the curve reaches the end of the bed, since thereafter the rise is so rapid that delivery of undesirably moist effluent can hardly be prevented.

In accordance with the invention of No. 3,448,561, this is prevented by detecting the advance of the front at a point in the bed sufficiently spaced from the effluent end to permit terminating the drying cycle before the front reaches the effluent end.

The "Chemical Engineers' Handbook" 5th edition, page 22 to 53 discloses the utility of the capacitance method in analyses which utilize the high dielectric constant of water for its detection in solutions. In order to improve the sensitivity of the capacitor, the concentration of moisture of the cell is increased by putting a moisture specific sorbent in the cell. This however does not suggest utility of a capacitance sensor to determine the amount of moisture adsorbed by a sorbent.

US—A—2,703,628 Pompeo discloses an apparatus for drying gases that includes two vessels, one of which is being regenerated while the other is onstream, and discloses in principle the utilization of a capacitor in the desiccant bed for indicating the condition of the desiccant, i.e., when the desiccant has become substantially saturated, or when it has been completely regenerated, without the necessity of running moisture determinations on the effluent from the bed. The idea is to obtain a true indication of the drying capacity of the desiccant, regardless of the degree to which the desiccant has become contaminated with other products, and to change the flow of moist air, and channel it through the regenerated unit, when the moisture removal capacity of the onstream unit has decreased to an undesirable value.

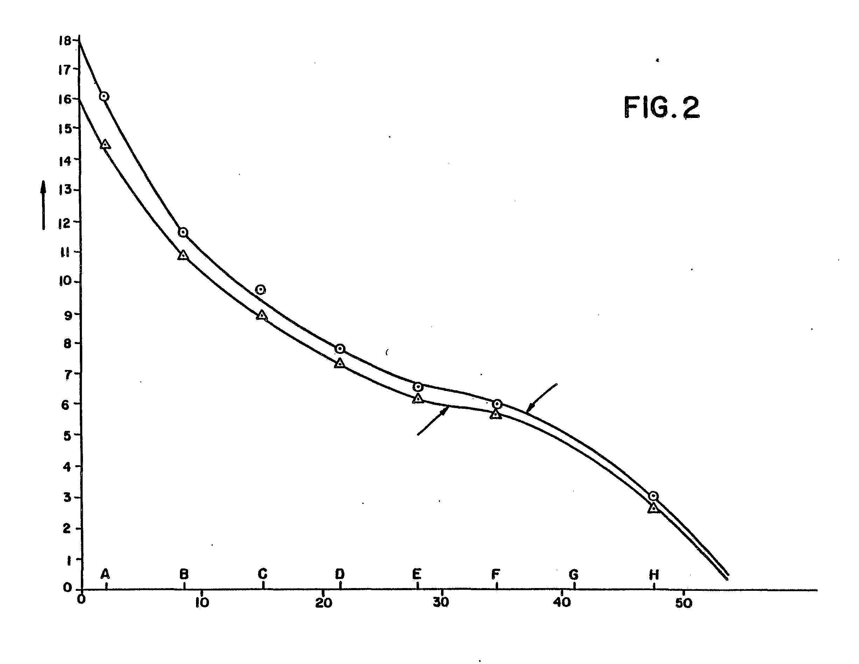

The apparatus shown in the drawings has two vessels 10, 11 with each vessel provided with two capacitors 66, 67, one at each end, as best seen in Figure 2, fixedly mounted on a steel pipe which is centrally positioned in the vessel.

Each of the capacitors comprises a pair of concentric tubular cylindrical elements 71, 72, which form the electrodes of the capacity cell. The inner electrode 72 is secured to the pipe 68 by bushings 73, 74 so that only the outer surface of this element is exposed to the desiccant, and the flow of air or other gas through the vessel. The outer electrode 71 is secured to the pipe by steel connecting pins 75, 76 at the top and bottom of the electrode, with spacing elements inserted between the two electrodes so that the spacing between the two is positively fixed. Only the top and the bottom of the cylinders are open. The cylindrical elements have impervious solid walls, impervious to gas flow. The space between the two cylindrical electrodes is of course filled with desiccant.

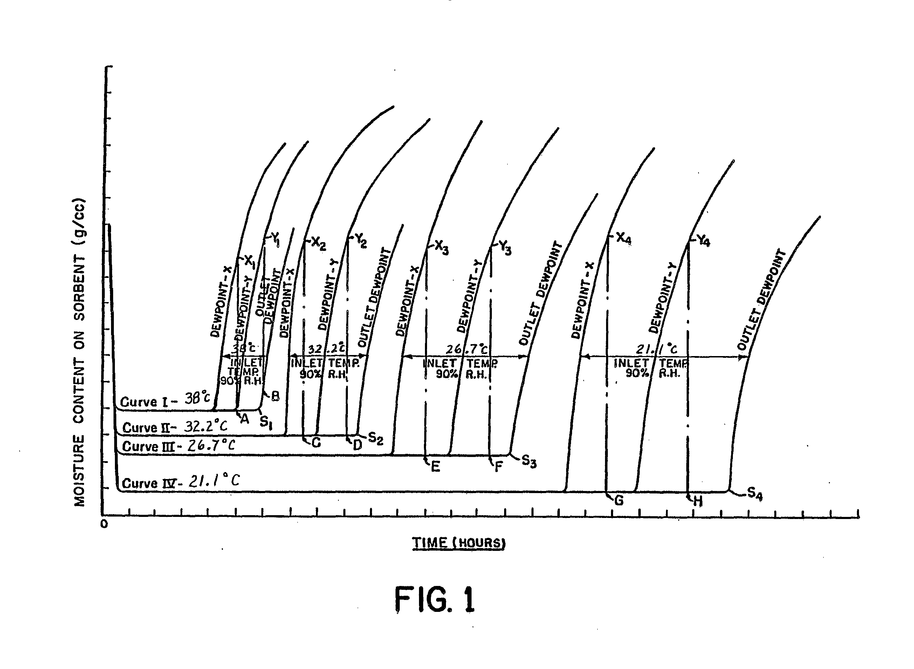

The capacitors are connected to a capacity bridge shown in Figure 1, and can be connected together in parallel or in series.

The capacity cells 66, 67 of vessel 10 and 66a, 67a of vessel 11 are connected to the recorder controller unit 86. This is provided with a pair of bridges 87, 88, either built into the unit or placed adjacent to it. The cells 66, 67 are connected to the bridge 88, and form one arm thereof, while the cells 66a, 67a are connected to one arm of the bridge 87. The variable resistances 97, 98 form the balancing arms of the bridges 87, 88.

As the moisture front passes down through the bed of desiccant, it also moves through the desiccant sample in the annular space of the capacity cell 66, causing the dielectric constant to change, which is recorded by the unit 86. As the moisture front continues to move downwardly, it approaches and moves past the second capacity cell 67, and the change in the dielectric constant is recorded in the recorder controller unit 86. When the moisture front reaches the capacitor 67, the drying capacity of the bed is substantially exhausted, and so when the second increase in dielectric constant is recorded the switch 64 is automatically actuated, de-energizing the conduit 60, and energizing the conduit 61.

During regeneration, hot air is forced up through the bed in vessel 10. The baffles 15 effectively baffle the flow, so that there is a substantially horizontal wet front moving upwardly through the bed, and the unit 86 records the change of dielectric constant of the desiccant in the lower cell 67. When the entire bed of desiccant is dried, the recorder 86 will so indicate, because then the upper cell 66 shows a change in dielectric constant. The recorder controller can be connected to cut off the supply of regenerating hot air upon a change in the dielectric constant of the desiccant in the upper cell 66.

It is apparent from this disclosure that the capacitors are arranged to detect the change in capacitance only of a relatively small sample of the desiccant bed. This sample moreover is limited to the central core of the bed. It is therefore necessary to ensure that insofar as possible the portion of the flow that is sampled is representative of the entire flow. This requires the baffles 15 as Pompeo et al states, but of course nothing can really ensure a representative sample, even so. Moreover, because of the limited access to the sample, the capacitors being open only at the top and bottom, while flow of the gas through the bed is necessarily diffuse, because of the close juxtaposition of the desiccant particles meaning that the path through the bed must wind in and out, not only in a straight-through direction but more often in a devious direction, possibly even at times horizontally, because the particles themselves block the path, a capacitor structure such as shown by Pompeo et al is not the most efficient type, and accurate capacitance measurements are not necessarily and reliably obtained. It is quite possible the bed outside the capacitors will have been exhausted before the capacitors register exhaustion, because the flow through the capacitors is less disproportionately than in the rest of the bed.

It is also apparent that the electrical circuitry provided for sensing the change in capacitance, recording it, and giving a signal is of a rather primitive nature, representing a degree of sophistication corresponding to the development of the art in 1955, but hardly representative of what can be done today, with the increased availability of a wide variety of electrical and electronic components. The applicant's circuitry is of a considerably more advanced and more accurate nature.

In addition, there is nothing in this patent regarding an adsorbent gas fractionator system in which the regeneration of the bed is effected without the application of heat, i.e., a "heaterless" system, as in the Skarstrom patent, and there is nothing to teach one skilled in the art how to arrange the capacitors in such a system, for representative and accurate monitoring of the degree of exhaustion and of regeneration of the bed.

Accordingly, it is an object of the invention to provide a process and an apparatus for reducing the concentration of first gas in a mixture thereof with a second gas to below a limiting maximum concentration thereof in the second gas in which process and apparatus practically there can be no errors due to disproportionate differences in flow in different portions of the bed.

The invention is starting with the process and apparatus of the independent claims. The invention consists in the characterizing portions of the independent claims, taken together with their respective introductory parts.

This invention is applicable to gas adsorption fractionating systems wherein any part or the entire sorbent bed is heated to effect regeneration; to systems wherein no heat is applied to effect regeneration; to systems wherein regeneration is effected at reduced pressure; and to systems utilizing a purge gas flow; and to systems combining one or more of these features.

As a further feature in accordance with the invention, since the regeneration cycle need not be and in most cases is not of a duration equal to the drying cycle, the sorbent bed being regenerated can be closed off, and heating, purge, evacuation, or whatever regeneration system is used discontinued when regeneration is complete. The remainder of the cycle time can be used, for instance, for cooling down of the regenerated bed, so that it is at a convenient and efficient temperature for adsorption when the flow of influent gas to that bed is resumed.

The drying apparatus in accordance with the invention comprises as the essential components a sorbent bed adapted for periodic and preferably counterflow regeneration and one or a plurality of capacitors in the bed for detecting the moisture content therein at a point in the bed sufficiently distant from the effluent end thereof to enable termination of a cycle before effluent exceeding a limiting maximum concentration of gas being adsorbed can leave the bed.

If in addition or in the alternative it is the regeneration of the bed that is to be observed as a function of capacitance, then the capacitor or capacitors are placed at a point in the bed to enable termination of the regeneration when desorption of adsorbed gas has reached a selected low level or is complete.

Optionally, the apparatus includes means for applying heat during such regeneration. Such means can extend throughout the bed, or it can be limited to only that portion of the sorbent bed having a high moisture content, of the order of 20% of its moisture capacity or higher, at the conclusion of a drying cycle, i.e., to only that portion first contacted by influent flow during a drying or adsorption cycle. In this case the remainder of the sorbent bed is not heated during regeneration, and consequently no heating means are provided therein. The unheated proportion of the bed volume can accordingly be as large as desired. Usually from one-fourth to three-fourths of the bed volume, preferably from one-third to two-thirds of the volume, will be heated.

In effect, the unheated portion of such a bed constitutes a reserve bed, which in the normal drying cycle may not be required at all, and in which in any case the sorbent is apt to adsorb only a relatively small proportion, less than 20%, of its capacity of moisture, but which is present in order to prevent the delivery of effluent gas of undesirably high moisture content in the unlikely event that moisture is not sufficiently adsorbed in the portion of the bed provided with heating means. The moisture-adsorbing capacity of the reserve portion of the bed is so little used that the reserve sorbent is regenerated by the purge flow, whether or not the purge flow is heated, and any moisture carried forward from this portion by purge flow therethrough is of course effectively removed from the bed after passage through the heated portion thereof.

While the apparatus of the invention can be composed of one desiccant bed, the preferred apparatus employs a pair of desiccant beds, disposed in appropriate vessels, which are connected to the lines for reception of influent gas to be dried, and delivery of effluent dried gas.

The drying apparatus can also include a check valve or throttling valve for the purpose of reducing pressure during regeneration, and multiple channel valves for cycling the flow of influent gas between the beds and for receiving the flow of effluent gas therefrom. In addition, a metering or throttling valve can be included to divert a portion of the dried effluent gas as purge in counterflow through the bed being regenerated.

The capacitor can sense moisture content as a function of capacitance at any portion in the desiccant bed. In some dryers, such as heaterless dryers, which operate at very low total moisture levels on a desiccant bed per drying cycle, it may be desirable to place the capacitor very close to the inlet, say, from one-fiftieth of the length of the bed from the inlet to halfway down the bed. Usually, for optimum results, at flow rates of up to (150 ft/min.), 45,7 m/min to ensure that a breakthrough of effluent of undesirably high moisture content is prevented, the capacitor is placed at a point within the range from two-thirds to one-fiftieth of the length of the bed from the effluent or outlet end. If the capacitor is sufficiently quick in response, however, or the permissible moisture content of the effluent sufficiently high, it can be placed adjacent to the outlet port from the bed.

To some extent, the position of the capacitor in the bed is determined by the rate of flow of effluent gas through the bed, allowing the capacitor time to react to the moisture content therein before the effluent exceeding the limiting maximum moisture content can break through the bed. In general, the higher the rate of flow, the further the capacitor should be placed from the effluent end of the bed, so as to ensure that the effluent exceeding the limiting maximum moisture content is detected soon enough to prevent its leaving the bed and entering the system being conditioned.

The type of capacitor and its position in the bed will be selected to detect a moisture level in the gas being dried in time to give a signal before effluent exceeding the limiting maximum moisture content can leave the bed. The margin of safety required for a particular system is easily determined empirically, obtaining data and plotting moisture content curves for the particular system to be used. This one skilled in this art can do without the exercise of invention.

Any capacitor of conventional design can be used. In the simplest form a pair of flat metal sheets parallel to one another are spaced apart at a variable or fixed distance. Three or more flat parallel metal sheets can be used by connecting alternate sheets together to form a stack of interleaved sheets. Several pairs of sheets can be mounted at one level in a sorbent bed and the pairs connected in parallel electrically.

A cylindrical form has a tubular conductor with a wire, rod or tubular conductor mounted inside it, concentrically or eccentrically. An electrically conducting housing, tank or shell receiving the sorbent bed could serve as one conductor and the other conductor could be a heater tube or other fixture embedded in the desiccant.

The conductor used for a plate can be of any form: wire, rod, sheet, strip, mesh, sintered metal, etc., as long as it is electrically conductive. It is not necessary that sheet conductors be parallel or that tubular conductors be concentric, provided they be electrically isolated from one another. The conductors can be fixed or adjustable, to allow adjustment of the capacitor.

The spacing between the two conductors of the capacitor is determined by the volume required to accommodate in the space a uniform packing of desiccant. The spacing should be as close as possible since the sensitivity of the capacitor decreases as the spacing increases. The conductors can be bare metal or coated with an electrically insulating layer to isolate them from the desiccant, if the desiccant exhibits undesirably high conductivity. Such an insulating layer can include non-electrically conducting plastics such as polyolefins, polyethylene, polypropylene, and polyisobutylene, synthetic and natural rubbers, epoxy resins, ceramics, and glass. Since the volume of sorbent between the two conductors of the capacitor is used as a typical sample showing the condition of the sorbent bed, it is important that it receive all or a uniform portion of the gas flow through the bed. To this end, the conductors should be more or less in-line with the flow, and not in a cul-de-sac at one side of the flow.

If the entire shell of a vessel containing the sorbent bed functions as one plate of the capacitor, and a concentric rod, wire, tube or cylinder extending for part of all of the interior length of the shell as the other, the capacitor senses the total amount of water adsorbed by the desiccant bed, rather than a sample representation of the moisture load at a particular location in the bed.

Signal conditioning to convert the change in capacitance of a capacitor into an electrical, mechanical, audible, or visual signal can be accomplished in any of several ways. LM2917N integrated circuits made by National Semiconductor are intended for use as frequency-to-voltage converters, but with suitable external components and connections can be made to function as capacitance-to-voltage converters. A bridge circuit excited by a sine wave can also be used to generate a voltage proportional to capacitance. The sine wave can be generated by a circuit built with operational amplifiers, for example, National Semiconductor part No. LM741N. The probe could be used as the capacitor in a series or parallel capacitor-inductor circuit excited by a constant frequency, constant amplitude sine wave. By proper selection of the exciting frequency and the value of the inductor, such a circuit can be designed to resonate at any value of capacitance over the range sensed by the capacitor. The output of such a circuit changes markedly when the capacitance reaches the value necessary to cause resonance. Again, the exciting sine wave could be generated using LM741N or similar operational amplifiers. The capacitor can also be used as a feedback component in an operational amplifier configured as an inverting or non-inverting amplifier and used to amplify a constant frequency, constant amplitude sine wave. Such a circuit would have a sine wave output with its amplitude modulated by variations in capacitance.

One or more capacitors can be installed in at least one and preferably all of the sorbent beds of the gas fractionating system.

Two or more capacitors at selected locations in a sorbent bed can detect the progress of a moisture gradient or sorbed component gradient through the bed. A capacitor can be mounted in a portion of a bed which normally adsorbs very little or no detectable water vapor or other sorbed component and used to trigger an alarm if water or other sorbed component appears in that area of the bed. Two capacitors at different levels in the bed could be used to compare the capacitance with a "reference" capacitor located in a portion of the bed which is either always wet or always dry, with the "sensing" capacitor located in a portion of the bed which cycles from dry to wet and back during normal operation.

A capacitor can be used to give an indication of the condition (i.e. water-adsorbing capacity) of the desiccant in a dryer, by monitoring the loss of water adsorbing capacity in the desiccant as reflected in a gradual decrease in the maximum capacitance, by mounting it in a portion of the bed which is saturated with adsorbed water at some stage in the operating cycle.

The following exemplify preferred locations for capacitors in the sorbent beds for control of adsorption and/or regeneration cycle time in heated dryers and in heaterless dryers.

In heated dryers each bed should have one capacitor mounted at the point in the bed reached by the moisture front when the bed has been exhausted. The relatively large change in capacitance caused by the change in adsorbed water content of the desiccant between the capacitor conductor as the moisture front traverses the capacitor is converted into a signal to initiate cycling of the bed from onstream to offstream, for regeneration. If there are two beds, the regenerated bed can be put onstream at the same time. The criterion for bed exhaustion is the arrival of the moisture front at a point in the bed preselected to maintain a given effluent dew point.

Another capacitor in the bed of a heated dryer can be used to sense completion of regeneration when the bed is offstream for regeneration.

Since the method of optimizing cycling in heaterless dryers is dictated by the fixed cycle time required in such dryers, the capacitor is best used to control the duration of delivery of purge gas to the regenerating bed. The most direct, and preferred, approach is to mount the capacitor near the influent end of each bed to detect the arrival of the moisture front at that end of the bed as it is driven towards that end by the purge gas during regeneration. Upon arrival of the moisture front at that point which ensures maintenance of effluent dew point under maximum moisture load conditions when that bed is switched back on stream, the purge gas would be shut off. Another more complex and less desirable arrangement places the capacitor at a point in the bed through which the moisture front would pass during operation under typical conditions. The time at which the moisture front passed the capacitor during the drying cycle for that bed would be stored, and would be correlated with the rate at which moisture was being adsorbed onto the desiccant in that bed. That time would be used to calculate, such as via a microprocessor, the amount of purge required for regeneration of that bed when it entered the regeneration portion of the NEMA cycle.

The fundamental advantage of the capacitor is that it gives, relative to other sensing and/or computing methods of monitoring dryer performance, a direct indication of the moisture content of the bed, and therefore of the amount of bed capacity which is being used for adsorption, which is correlated to the depth in the bed to which the moisture front has penetrated, and hence, the extent to which the bed has been exhausted. There is a direct correlation between this information and the actual parameter of interest, i.e. the dew point of the effluent process gas, whether the capacitor is used to determine the position of the moisture front during drying or during regeneration. The sensing and control circuitry is designed to give quantitative measurements of desiccant loading, dew point and other parameters by relying on the quantitative change in moisture content sensed as dielectric constant. The response of a capacitor to changes in the amount of water adsorbed onto desiccant between its plates is instantaneous.

The means responding to the change in capacitance in the capacitor with moisture content can be electrical or mechanical or chemical or any combination thereof, but it is preferably arranged, responsive to a preselected change in capacitance, or to a preselected capacitance, to signal or control suitable valving, so as to conclude the drying cycle or regeneration cycle, and switch the influent and effluent gases from one tank to the other, at the time the predetermined maximum moisture level in the effluent gas is reached.

The time required for the moisture content in the effluent gas to reach the predetermined level is directly correlated with the moisture capacity and moisture content of the sorbent. As the gas proceeds across the length of a desiccant bed, its moisture content is progressively diminished, according to the rate of adsorption of moisture by the desiccant. Since the rate of adsorption of moisture by the desiccant is dependent upon the moisture capacity, the gas pressure, the temperature and the rate of flow of gas, it will be apparent that for a given temperature and pressure of influent gas, the predetermined moisture level of the effluent gas will be reached only when the moisture load of the sorbent has also reached a predetermined level. Since the capacitor responds directly to moisture load on the sorbent, it is possible in accordance with the invention to adjust the drying cycle length precisely in accordance with the moisture content or load of the sorbent, and thus effectively utilize the moisture capacity thereof in each drying cycle, without however introducing a danger of breakthrough.

Consequently, the desiccant dryers in accordance with the invention can be arranged to operate to a predetermined moisture load on the desiccant during each drying cycle. This means that if the moisture level of the influent gas varies, the drying cycle length is also automatically adjusted accordingly. The result is that a drying cycle is not terminated until it is necessary to do so, and unnecessary regenerations of the desiccant are eliminated. It thus also becomes unnecessary to build in a reserve capacity of desiccant; since the drying cycle depends on the moisture capacity of the desiccant volume utilized, a smaller volume of desiccant than was formerly required will now be sufficient. At the same time, the volume of purge lost during each cycle is kept to an absolute minimum. In effect, the desiccant dryers of the invention can be made to automatically time their drying cycles according to the demand made upon them by the moisture content of the influent gas, and consequently such dryers in accordance with the invention are referred to as demand cycle dryers.

The regenerating cycle, on the other hand, need not be and preferably is not automatically the same in length of time as the drying cycle. Since the drying cycle can be very greatly lengthened, according to demand, the regenerating cycle can be time-controlled, to end when regeneration is complete, even if the drying cycle continues. This also will ensure that the purge flow and energy used in any heating of the bed will not be wasted when no longer needed. The regeneration cycle can be linked to another capacitor, to end when the sorbent drying ends, if this be before the timed regeneration cycle is completed, or the capacitor can be linked to the regeneration cycle capacitor or timer, to be ineffective to end the drying cycle until regeneration be complete. The same capacitor can also be used to control the regeneration cycle, as indicated above.

In order to prevent unnecessary dumping of the process gas in the sorbent bed in heaterless dryers, and concommitant loss of process gas when the flow of process gas is very low, and does not warrant any significant flow of purge gas (since the volume of gas lost during dumping would be quite large, compared to the volume of purge gas required for regeneration during conditions of very low process flow, such a mode of operation could effect substantial savings), hysteresis can be introduced into the control mechanism. The capacitance moisture sensor would then terminate regeneration at a sensed capacitance slightly lower than the sensed capacitance required to initiate regeneration. Thus, if a fully regenerated bed were switched onstream under conditions of no process flow, and hence had no downward migration of the mass transfer zone, and no increase in the capacitance of the capacitance probe, it would call for no purge, and no depressurization, when it entered the regeneration half of the cycle. In contrast, a bed without hysteresis would depressurize and purge for a very short period upon entering the regeneration half of the cycle since the capacitance level at which regeneration was terminated would also be interpreted as the (minimum) capacitance level necessary to cause initiation of regeneration.

The degree of hysteresis is determined by optimization of overall efficiency. Large hysteresis saves the maximum amount of process gas which would ordinarily be lost during depressurization, by allowing a substantial amount of water to accumulate in the bed before calling for purge and causing depressurization. At a low flow rate, this means that purge may not be called for for a number of NEMA cycles and as a consequence, the heat of adsorption tends to be lost. On the other hand, relatively small hysteresis makes better use of the heat of adsorption by allowing less water to accumulate in the bed before calling for purge. This means the dryer will call for purge more frequently at a given flow rate, allowing less time for the heat of adsorption to dissipate. The penalty paid is that more process gas is lost via more frequent depressurizations. These two factors mean a trade-off to optimize efficiency, and this trade-off, which may result in a different hystersis for each size of dryer, is a part of the control circuit design.

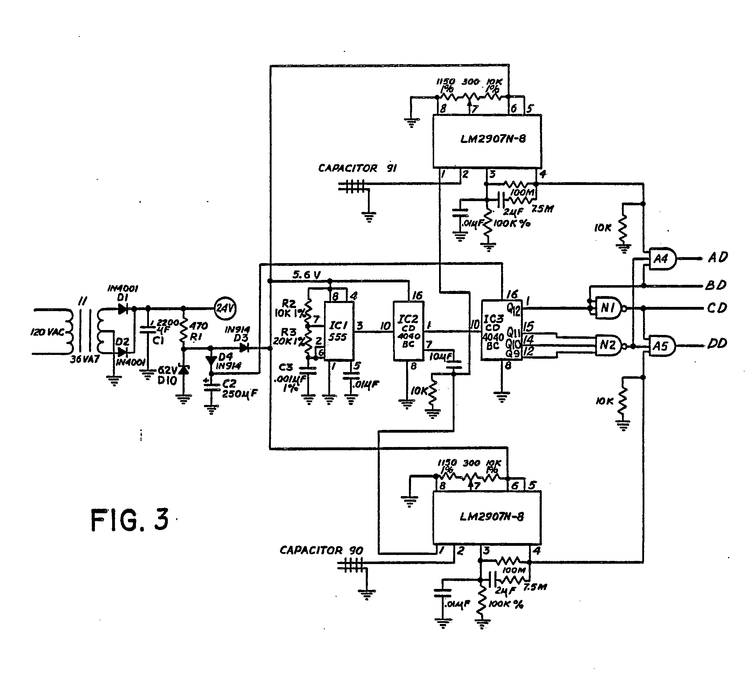

The required hystersis can be introduced into the electronic signal-conditioning circuit shown in Figure 3. The resistor H is the only component required to introduce the hysteresis. The value of resistor H determines the amount of hysteresis, i.e. the difference between the two capacitance levels at which the output of the circuit goes to a high or a low state.

Hysteresis can also be used by placing two capacitors at slightly different levels in the bed, and using the upper capacitor to signal the end of regeneration and the lower capacitor to signal the need for initiating regeneration in a downflow dryer. In this case, the amount of hysteresis can be adjusted by varying the vertical separation of the two probes.

In accordance with the invention the cycle is concluded before the moisture front or change in slope of the moisture content curve reaches the end of the bed, since thereafter the rise is so rapid that delivery of undesirably moist effluent can hardly be prevented. This is prevented by the capacitor by detecting the advance of the moisture front at a point in the bed sufficiently spaced from the effluent end to permit terminating the drying cycle before the front reaches the effluent end.

The following comparison illustrates the effect of two levels of hysteresis in a capacitance control system on the efficiency of process gas utilization:

|  | High hysteresis (5.1 megohm resistor) | Low hysteresis (10 megohm resistor) |
|---|---|---|
| Run time | 16.76 hr. | 44.01 hr. |
| Number of NEMA half cycles | 201 | 528 |
| Average purge duration per half cycle | 190 sec. | 170 sec. |

Inlet conditions for the 150DHA used were very nearly identical: 3,56 m³/min (125.8 scfm) inlet flow at 4,74 bar (67.5 psig) for the high test 3,52 m³/min (125 scfm) inlet flow at 4,78 bar (68 psig) for the low test. The low hysteresis test called for purge every cycle. The high hysteresis test saved a total of 66 dumps.

Since the volume of gas lost per dump was equal to about 11 seconds of purge flow at the purge rate used, the high hysteresis run saved process gas equal to 726 seconds of purge flow. Averaged over 201 half cycles, this represented an average savings equivalent to 3.6 seconds of purge flow per half cycle.

This reduces the actual gas consumption per half cycle to the equivalent of 186.4 seconds of purge flow. Thus the high hysteresis test consumed more gas to maintain outlet conditions than the low hysteresis test, even though it saved dumps.

How this is done is best seen in reference to Figure 1.

Figure 1 represents a series of curves for the drying of moist gas at 80% relative humidity at temperatures ranging from 38°C (100°F), plotting the moisture content of the sorbent bed, determining as a function of the capacitance of the bed, against time for gas being dried, detected by placing capacitors at a series of points X 76,2 cm (30 inches) in from the effluent end of the bed, and at a series of points Y 60,9 cm (24 inches) from the effluent end of the bed.

The curves represent a system in which air is at a line pressure of 6,47 bar (92 p.s.i.g.) and a superficial flow velocity of 19,8 m/min (65.1 fpm) using silica gel 80,3 kg (177 lbs) as the desiccant in a bed 152,4 cm (60 inches) long, and 31,4 cm (12 3/8 inches) in diameter, as in Example 1. The data is typical however of that obtainable using any desiccant under any adsorption conditions.

The principle of the process of the invention is to detect and halt the cycle before the change in slope S of the moisture front has reached the outlet, i.e., in Figure 1, before about 2.4 hours cycle time for Curve I, about 3.3 hours cycle time for Curve II, about 4.5 hours cycle time for Curve III, about 6.3 hours cycle time for Curve IV. The curves of Figure 1 show that this can be done by terminating the cycle whenever the moisture level in the sorbent bed at point X and at point Y does not exceed 2%.

This moisture content is susceptible of detection by available capacitors.

When capacitors are present at points X and Y in each of the drying cycles represented in Figure 1, the curves show the moisture content of the sorbent bed when the capacitors are actuated. In all cases, Curves I, II, III and IV, capacitor X is actuated at points A, C, E and G, and capacitor Y at points B, D, F and H, all before the change in slope $S_2$, $S_3$, $S_4$, and thus in time to prevent the moisture front's leaving the bed.

Figure 2 is a graph of sorbent bed moisture content determining as a function of capacitance against time, according to Example 2.

Figure 3 is a detail view of the electronic sequence timer circuit of a dryer; and

Figure 4 is a timing diagram showing the timing interval sequence of the timer circuit of Figure 3.

The general construction and operation of a two-bed heat-reactivable or heaterless desiccant dryer is prior art and therefore not described in detail. See for instance EP—A1—39 504, Figures 3—6 or EP—A1—9 139.

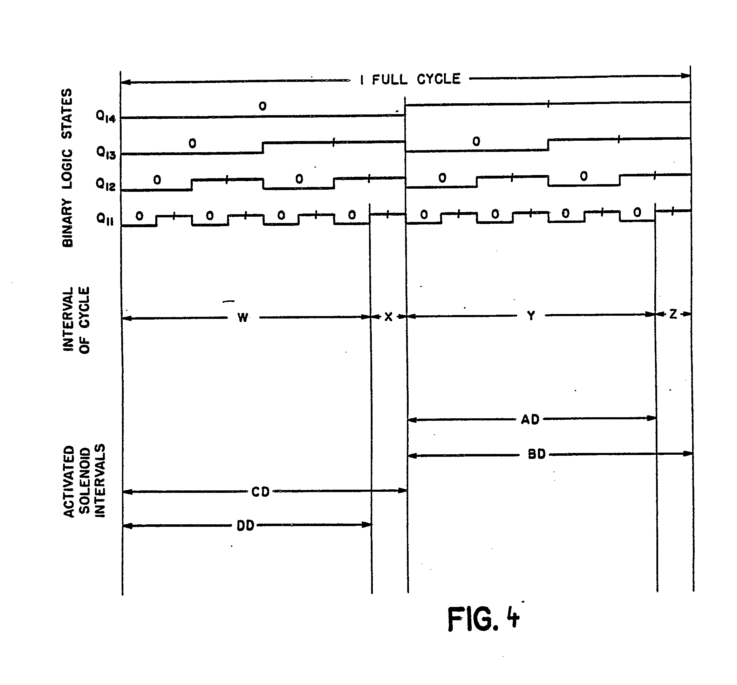

Four valves for operating such a desiccant dryer are pneumatically driven by solenoid operated pilot valves, which are connected to and controlled by an electronic sequence timer whose circuitry is shown in Figure 3. The timing intervals for solenoid valves are shown in Figure 4.

As seen in Figure 3 24 volt D.C. power is derived through a 36 volt center tapped transformer T1 and rectifiers D1 and D2, and filtered with a 2200 Mfd electrolytic capacitor C1.

The low voltage logic potential is maintained by supplying a 6.2V 0.4W Zener diode D10 through a power-dissipating 470 $\Omega$, resistor R1 from the filtered 24 V.D.C. supply. While this Zener regulation adds the advantage of power supply noise isolation to the function of reducing the supply voltage, it might not be necessary if the initial filtered supply and solenoid operating voltage were in the operating range of the logic IC's (15 volts or less).

This low voltage is split into two supplies by diodes D3 and D4 so that the charge on 250 Mfd capacitor C2 can be used to maintain a small leakage current into the integrated circuit IC2 to retain memory of cycle position in the event of short term power failure. These two diodes are used to maintain the same supply voltage ($V_{cc}$) on all logic integrated circuits (approximately 6 volts).

The integrated circuit 555 timer IC1 is set to oscillate at 27.962 kHz for a 10 minute cycle by the proper selection of precision resistors R2 and R3 and capacitor C3 used in its oscillator circuit.

The 555 timer is a highly stable device for generating accurate time delays or oscillation with a normally-on and normally-off output timing from microseconds through hours, an adjustable duty cycle, and operational in both astable and monostable modes. In the system shown, it is operated in the astable mode, in which the timer will trigger itself and free-run as a multivibrator. The external capacitor charges through R2+R3 and discharges through R3. Thus, the duty cycle may be set precisely by the ratio of these two resistors, and the resistors can be changed as required to achieve the desired ratio.

The capacitor charges and discharges between $\frac{1}{3}$ $V_{cc}$ and $\frac{2}{3}$ $V_{cc}$. The charge and discharge times and frequency are independent of the supply voltage. The charge time is given by the equation:

$$t_1 = 0.693 \ (R2+R3)C3$$

and the discharge time by the equation:

$$t_2 = 0.693 \ (R3)C3$$

Thus, the total period is $T = t_1 + t_2 = 0.693$ (R2+2R3)C3. Any desired time cycle can of course be selected, and IC1 set accordingly.

The output of the oscillator drives the first stage of a 14 bit I.C. binary counter IC2.

IC2 serves to reduce the frequency of the output of IC1. It provides two frequencies, one from pin 7 to drive pin 1 of the LM2907 and one from pin 1 to drive pin 10 of IC3.

IC3 is a CMOS twelve stage ripple-carry binary counter/divider identical to IC2 and consists of a pulse input shaping circuit, reset line driver circuitry, and twelve ripple-carry binary counter stages. Buffered outputs are externally available from stages 1 through 12. The counter is reset to its "all zeros" state by a high level on the reset inverter input line. This reset is not used in this application. Each counter stage is a static master-slave flip flop. The counter is advanced one count on the negative-going transition of each input pulse. With this integrated circuit, each bit is changed in stage between logic 0 and logic 1 when triggered by the negative going pulse (logic 1 to logic 0 of the preceding stage). Each stage therefore reverses logic state at half the frequency of the preceding stage, keeping a 12 bit binary record of where the unit is in its cycle, as seen in Figure 4. In the last portion of the timing cycle, all 12 bits are at logic state 1. The next negative swing of the oscillator drives all bits 2 to logic state 0, and the next cycle begins. The last four bits $Q_9$, $Q_{10}$, $Q_{11}$ and $Q_{12}$ of this counter contain the required information to divide the cycle into 16 even segments, and identify which portion the unit is in at all times.

These four bits are fed to a series of logic gates which determine the proper combination of logic states which satisfies the conditions under which each of the four outputs should be in their driving state.

The circuit includes two NAND gates N1, N2 and two AND gates A4, A5.

One input of AND gate A4 is connected to NAND gate N2, while another is connected directly to $Q_{12}$. The third input is connected to the capacitor output for the chamber controlled by valves A, B. The output of A4 is connected via the driving transistor (not shown) to solenoid valve AD. Only if all three inputs are 1, is solenoid A powered.

One input of AND gate A5 is connected to NAND gate N2, and one input is connected to NAND gate N1. The third input is connected to the capacitor output for the chamber controlled by valves C and D. The output of A5 is connected via the driving transistor (not shown) to solenoid valve DD.

$Q_{12}$ is connected via the driving transistor (not shown) to solenoid valve BD without the intervention of any gate.

It is powered when the $Q_{12}$ output is 1. NAND gate N1 is connected via the driving transistor (not shown) to solenoid valve CD, AND gate A5 as noted is similarly connected to solenoid valve DD.

Both of the NAND gates is of the three-input type, with the result that the only time there is 0 output is when all three inputs are 1. Since however all three inputs of N1 are connected to the same stage $Q_{12}$, this NAND gate is simply an inverter, and gives an output that drives the solenoid CD through its output transistor, only when there is 0 output from $Q_{12}$, but not otherwise.

NAND gate N2 has its three inputs connected respectively to stages $Q_9$, $Q_{10}$, and $Q_{11}$, and therefore gives an output of 1 unless all of $Q_9$, $Q_{10}$, and $Q_{11}$ are 1.

Solenoid valve DD is powered through its driving transistor by AND gate A5, which has three inputs, one from N1, one from N2, and one from the capacitance probe circuit. There is consequently an output of 1 from A5 to the solenoid valve DD driving transistor only if both N1 and N2 give outputs of 1, and if the probe senses moisture.

NAND gate N1 is at 1 during W and X, and at 0 during Y and Z. NAND gate N2 is at 1 during W and Y, and at 0 during X and Z. AND gate A4 is at 1 during Y, and at 0 during W, X and Z, and AND gate A5 is at 1 during W, and at 0 during X, Y and Z, asssuming that the appropriate capacitance probe senses a sufficient moisture level to require purge.

Accordingly, the time intervals dictated by the timer and by the capacitors are as shown in Figure 4. Solenoid valve CD is powered during intervals W and X, and solenoid valve DD during interval W. Solenoid valve BD is powered during intervals Y and Z, and solenoid valve AD during interval Y.

The power outputs of these gates switch the solenoid drivers or driving transistors $Q_1$, $Q_2$, $Q_3$, and $Q_4$, (not shown) on and off through current limiting resistors R4, R5, R6, and R7 (not shown). These transistors drive the solenoid valves and are protected from inductive fly-back by diodes D5, D6, D7, and D8 (not shown).

The intervals W+X and Y+Z correspond to the drying cycle times for the tanks I and II, respectively.

The intervals W and Y correspond to the regeneration stage for the tanks II and I, respectively, and the intervals X and Z correspond to the repressurization stage when regeneration is complete. The capacitors operate valves A and D and so control regeneration flow and halt chamber effluent flow when regeneration is complete, allowing repressurization, while the timer operates valves B and C and so changes influent from one chamber to the other.

In accordance with the invention, it is possible to carry the moisture content of the desiccant to a very high level, much higher than is normally feasible, because of the protecting action of the humidity sensing element, which makes it possible to cut off flow at a time more precisely gauged to moisture level than has heretofore been possible. Consequently, in many cases if the bed is brought nearly to the saturation point throughout, it will make little difference if the purge flow enters at the influent end or at the outlet end, and the invention contemplates both types of operation, although of course counterflow regeneration is preferred in most cases.

The drying apparatus each employ one capacitor per tank. However, it is also possible to employ two, three or more of such capacitors per tank. This will ensure operation of the device despite failure of one or more capacitors in the group. The capacitors can be placed at different levels in the desiccant bed, so as to follow the passage of the moisture front progressively through the bed. As stated previously, as the drying cycle continues, the moisture front gradually moves from the inlet end towards the outlet end of the bed. Therefore, the passage of the front will of course actuate a capacitor further from the outlet end sooner than a capacitor nearer the outlet end. Two capacitors spaced at a significant distance from each other will actuate at different times, and this fact can be used to actuate different stages of the cycle, such as regeneration and repressurization, at different times.

Thus, it is possible to employ one capacitor at a point spaced a considerable distance from the outlet end of the bed, say, halfway down the bed, to detect the front and actuate the cutting off of the heaters in the bed being regenerated, for example so that these are cut off early enough to ensure cooling of the bed on the regenerating cycle before it is put on the drying cycle. A second intermediate capacitor can be used to actuate closing of the purge exhaust valves, and repressurize the regenerated bed. A third capacitor at the far end of the bed may actuate the switching of the cycle switches, and terminate the drying cycle. In this case, of course, no timer is needed, and the regeneration cycle time is determined not by a timer but by the capacitor.

The influent gas stream may on occasion be contaminated with gas and liquid substances other than the substance intended to be adsorbed, such as water which upon adsorption on the sorbent change the dielectric constant in a way different from the intended adsorband and "poison" the desiccant. Such contaminants may reduce the sorbent capacity to adsorb water, or may coadsorb with water, and change the response of the capacitor by displacing water, which has a high dielectric constant, and replacing it with a contaminant with a lower or higher dielectric constant. Any of these responses would result in a spurious indication of moisture content at a given level in the sorbent bed.

By placing two capacitors in each bed, one at the chosen control point, and a second farther from the influent end of the bed, the erroneous response can be corrected. The control capacitor would be exposed to the effects of any such contaminant before the second capacitor would be. By taking into account the effect of variations in bed position on capacitor output, in the absence of contaminant, the effect of such contaminant on capacitor response could be detected by comparing the output of the two capacitors, either continuously or intermittently, and designating a contaminated condition when the second capacitor gave a higher output than the control capacitor. The comparison would reveal whether the capacity of the sorbent at the control capacitor had been impaired by contaminant, or whether the dielectric constant had been changed by contaminant, and hence whether the control capacitor was in error.

The capacitor within the desiccant bed can be at any depth within the diameter of the bed, but the distance from the outlet is dependent on the gas velocity and temperature which influence the rate of travel and the contour of the moisture front in the bed. Other factors discussed previously are moisture content of the influent gas and the moisture content or level at which the capacitor is actuated.

The capacitors can be arranged to detect by way of moisture content of the sorbent any desired moisture level in the effluent gas, even very low dewpoints or relative humidities, although usually it is sufficient for it to detect a moisture content in the range above about −30°C dewpoint. The moisture level for the dry gas effluent from the desiccant bed is not normally below and about −90°C dewpoint at the outlet end of the bed.

The precise location of the capacitors in the bed is determined by one of two factors, the length of time to regenerate the bed, and the prevention of effluent dewpoint breakthough. Clearly, the capacitors must be located and adjusted so that the capacitors will sense a high moisture level in the sorbent bed before the effluent dewpoint becomes excessive, under most adverse conditions of influent flow rate, humidity and temperature. This may be done as shown in Figure 1. However, the capacitors must be located so that the amount of water required to saturate a bed sufficiently to actuate the capacitors can be desorbed in the regeneration time cycle provided.

Thus, in a dryer where the regeneration time increases disproportionately with the increased water content in the bed, such as a heaterless type, the capacitors will be moved closer to the inlet and the bed considered spent at a lower total moisture content in the bed than in a heated dryer.

As stated previously, taking the above factors into consideration, the proper positioning of the capacitors for detection of the moisture front at the proper time for terminating a drying cycle under any given adsorption conditions can be determined empirically, obtaining and graphing dewpoint-time or relative humidity-time data for the drying apparatus, as illustrated in Figures 1 of US—A—3,448,561.

Preliminary tests on the change in dielectric constant of desiccant with changes in the amount of water adsorbed onto the desiccant have been made using a test fixture consisting of two metal plates of 109.25 inch surface area spaced 0.75 inch. The space between the plates was filled with either dry or saturated samples of either alumina or silica gel desiccant. The values of capacitance measured were as follows:

|  | Dry | Wet | Wet/dry ratio |
|---|---|---|---|
| Alumina | 94.35 pF | 591 pF | 6.3 |
| Silica gel | 97.0 pF | 331 pF | 3.4 |

A test to determine the effect of oil on the capacitance of desiccant was also made by measuring the capacitance of a sample of dry alumina in the fixture, removing the alumina and mixing it with an excess of oil, returning the alumina-oil mixture to the test fixture and measuring the capacitance again. The dry alumina gave a capacitance of 97.5 pF and the alumina-oil mixture gave a capacitance of 102.0 pF, indicating that any reasonable level of oil contamination should have a negligible effect on such a capacitor.

The following Examples in the opinion of the inventors represent a preferred method of operation of a dryer system in accordance with the invention:

Example 1

A two-bed heat-reactivable dryer having two desiccant beds 152,4 cm (60 inches) long and 31,4 cm (12 3/8 inches) in diameter, containing 80,3 kg (177 lbs) of silica gel, was used to dry air at 80% relative humidity, 38°C (100°F) to 31,1°C (70°F) and 6,47 bar (92 p.s.i.g.) inlet pressure and 9,92 m³min (350 scfm) flow. The superficial flow velocity of the air was 15,8 m/min (65.1 feet per minute) at 38°C (100°F). Two capacitors X and Y, actuable about 3% relative humidity, corresponding to a sorbent moisture content of 2%, were placed in the bed, X at 76,2 cm and Y at 61 cm from the outlet end of the bed. The following are the data for four drying cycles carried out using this apparatus under these conditions, in each case terminating the drying cycle when capacitor Y was alarmed:

TABLE I

Effluent dewpoint at line pressure

| Inlet tem. | | Time to alarm at sensors (hrs). | | | | Time X Start of run | | Time Y alarmed | |
|---|---|---|---|---|---|---|---|---|---|
| °C | °F | X | Y | °C | °F | °C | °F | °C | °F |
| 38 | (100) | 2 | 2.4 | −57,2 | (−71) | −56,1 | (−69) | −55,6 | (−68) |
| 32,2 | (90) | 2.7 | 3.3 | −59,4 | (−75) | −58,9 | (−74) | −58,9 | (−74) |
| 26,7 | (80) | 3.7 | 4.5 | −61,7 | (−79) | −59,4 | (−75) | −58,9 | (−74) |
| 21,1 | (70) | 5.2 | 6.3 | −64,4 | (−84) | −63,3 | (−82) | −63,3 | (−82) |

It is apparent from the data that the capacitors X and Y each alarmed at a time to terminate the drying cycle at a safe moisture level in the effluent gas. It is also clear from the different times of the cycle that the capacitors made it possible to adjust cycle length to match variation in moisture level of the influent air, and thus preserve desiccant life by cutting down the number of regenerations materially. In order to ensure delivery of effluent gas of the proper moisture level, had this dryer been on a timed cycle interval, it would have been necessary to set the cycle interval at less than 2.4 hours, say 2.2 hours to prevent breakthrough at 38°C (100°F), since if it had run beyond this, the moisture level of the effluent gas might have exceeded the requirements. The cycle time can be extended to as high as 6.2 hours, if air at 21,1°C (70°F) and accordingly less moisture is introduced. It is apparent that as the moisture content of the influent air is reduced further, cycle time will be extended accordingly. Much longer times are possible if flow rate or inlet temperature are reduced accordingly.

Example 2

A two bed heaterless dryer having two desiccant beds 134,6 cm (53 inches) in diameter containing 38,6 kg (85 lbs) of alumina per bed was used to dry air at 50% relative humidity, 21,1°C (70°F, and 4,78 bar (68 p.s.i.g.) inlet pressure. The flow rate was 3,54 m³/min (125 s.c.f.m.), equal to a superficial flow velocity of 17,7 m/min (58 feet per minute). Eight capacitors A to H, spaced about 15,2 cm (6 inches) apart, as shown in Table II, sensing between 2 1/2 and 16% adsorbed water were placed in the bed. These were used to detect the concentration gradient from the inlet to the outlet of the bed by measuring moisture content of the sorbent alumina at each point.

TABLE II

| cm from inlet | (inches) from inlet | Capacitor |
|---|---|---|
| 5,1 | (2) | A |
| 22,9 | (9) | B |
| 38,1 | (15) | C |
| 55,9 | (22) | D |
| 71,1 | (28) | E |
| 86,4 | (34) | F |
| 104,1 | (41) | G |
| 121,9 | (48) | H |

The moisture content of the sorbent bed was graphed against time, as shown in Figure 2. The upper line corresponds to the adsorbed moisture profile in bed at the end of the onstream half-cycle for that bed. The lower line corresponds to the adsorbed moisture profile at the end of the regeneration half-cycle. Adsorbed water content at the outlet end of the bed (53.5 in.) (135,9 cm) is calculated assuming equilibrium with outlet air. Thus the cycle could have been terminated at any point, as might be required to ensure delivery of effluent gas of the proper moisture level.

While the invention has been described with principal emphasis on a desiccant dryer and a

12

process for drying gases, it will be apparent to those skilled in the art that this apparatus with a suitable choice of sorbent can be used for the separation of one or more gaseous components from a gaseous mixture. In such a case, the adsorbed component can also be removed from the sorbent by application of heat, and optionally, in addition, a reduction in pressure, during regeneration. Thus, the process can be used for the separation of hydrogen from petroleum hydrocarbon streams and other gas mixtures containing the same, for the separation of oxygen from nitrogen, for the separation of olefins from saturated hydrocarbons, and the like. Those skilled in the art are aware of sorbents which can be used for this purpose.

In many cases, sorbents useful for the removal of moisture from air can also be used, preferentially to adsorb one or more gas components from a mixture thereof, such as activated carbon, glass wool, absorbent cotton, metal oxides and clays such as attapulgite and bentonite, fuller's earth, bone char and natural and synthetic zeolites. The zeolites are particularly effective for the removal of nitrogen, hydrogen and olefins, such as ethylene or propylene, from a mixture with propane and higher paraffin hydrocarbons, or butene or higher olefins. The selectivity of a zeolite is dependent upon the pore size of the material. The available literature shows the selective adsorptivity of the available zeolites, so that the selection of a material for a particular purpose is rather simple and forms no part of the instant invention.

In some cases, the sorbent can be used to separate a plurality of materials in a single pass. Activated alumina, for example, will adsorb both moisture vapor and carbon dioxide, in contrast to Mobilbeads which will adsorb only water vapor in such a mixture.

It will, however, be understood that the process is of particular application in the drying of gases, and that this is the preferred embodiment of the invention.

Claims

1. A process for reducing the concentration of first gas in a mixture thereof with a second gas to below a limiting maximum concentration thereof in the second gas, which comprises passing the mixture in contact with from one end to another end of a bed of a sorbent having a preferential affinity for the first gas; adsorbing first gas thereon to form a gaseous effluent having a concentration thereof below the maximum, and forming a concentration gradient of first gas in the bed progressively decreasing from one end to the other end as the adsorption continues and an increasing concentration of first gas in the second gas defining a concentration front progressively advancing in the bed from the one end to the other end as sorbent capacity therefor decreases; detecting in a portion of the bed the advance of the first gas front in the bed by determining the change in the first gas content of the sorbent as a function of the capacitance of a capacitor in which the sorbent is the dielectric at least at a point in the bed sufficiently far from the end of the bed to prevent effluent having a limiting maximum first gas content from leaving the bed; and then discontinuing passing the gas mixture in contact with the bed before such effluent can leave the bed and the limiting maximum concentration of first gas in the second gas can be exceeded, characterized by said detecting the advance of the first gas front in the bed being made such that the capacitor receives substantially all of the gas flow through the bed.

2. A process in accordance with Claim 1, which comprises desorbing first gas from the bed by passing a purge flow of gas low in concentration of said first gas in contact with the bed, and then repeating the adsorption and desorption cycles in sequence.

3. A process in accordance with any one of Claims 1 or 2, which comprises removing sorbed first gas from the bed at an elevated temperature sufficient to desorb said first gas and/or removing sorbed first gas from the bed at a pressure below the pressure at which adsorption is effected.

4. A process in accordance with any one of Claims 1 to 3, which includes removing sorbed first gas from the bed at a pressure below atmospheric.

5. A process in accordance with any one of Claims 1 to 4, in which the passing of the gaseous mixture in contact with the bed is discontinued automatically when the concentration front has traveled a predetermined distance through the bed.

6. A process in accordance with any one of Claims 1 to 5, which comprises employing two beds of sorbent, a first of which is on a cycle for adsorption of the first gas, while the other of which is on a cycle for desorption of the first gas by a purge flow comprising effluent gas from the first bed.

7. A process in accordance with Claim 6, wherein the bed on a desorption cycle is subjected to the purge flow at room temperature or wherein the bed on a desorption cycle is subjected to the purge flow at an elevated temperature sufficient to aid in desorbing said first gas.

8. A process in accordance with Claim 7, wherein the bed on a desorption cycle is subjected to the purge flow at a pressure less than that for the adsorption cycle.

9. A process in accordance with any one of Claims 1 to 8, in which the first gas is water vapor.

10. Apparatus for reducing the concentration of a first gas in a mixture thereof with a second gas to below a limiting maximum concentration thereof in the second gas, a vessel being provided with a chamber therein for a bed of sorbent having a preferential affinity for the first gas; a line for delivering influent gas at an inlet end of said bed; a line for delivering effluent gas from an outlet end of said bed; a capacitor with electrodes, the space between them being filled with a volume of sorbent as the dielectric whose change in first gas content, detected as a function of dielectric constant, causes a change in capacitance thereof; means responsive to the change in capacitance to give a signal when a selected capacitance indicating a selected first gas content is reached or exceeded; and means for closing off the influent flow of gas in response to the signal, characterized by the electrodes of the capacitor being in the form of flat parallel sheet conductors comprising an open array of at least three such flat parallel sheet conductors interleaved with alternate sheets connected together in conducting relation and arranged in the bed substantially in-line with the flow in a manner to directly intercept substantially all of the gas flow through the bed the volume of sorbent as the dielectric.

11. Apparatus in accordance with Claim 10, wherein the capacitor is positioned in a central portion of the bed at a point from 1/50 to 2/3 of the length of the bed distant from the outlet end thereof.

12. Apparatus in accordance with Claim 10 or 11, in which the sheet conductors are bare metal.

13. Apparatus in accordance with Claim 12, in which the sheet conductors are coated with an electrically-insulating layer to isolate them from the sorbent.

14. Apparatus in accordance with Claim 13, in which the insulating layer comprises a non-electrically conducting plastic.

15. Apparatus in accordance with any of Claims 10 to 14, in which the conductors are placed substantially in-line with the flow, so as to receive a uniform portion of the gas flow through the bed.

16. Apparatus in accordance with Claim 10, wherein the vessel is heaterless.

17. Apparatus in accordance with any one of Claims 10 to 16, comprising means actuated by the capacitor during the regeneration cycle, closing off the sorbent bed after the sorbent has been regenerated and stopping the regeneration cycle.

18. Apparatus in accordance with any one of Claims 10 to 17, comprising a plurality of capacitors in the bed for detecting the first gas content therein at a point in the bed sufficiently distant from the effluent end thereof to enable termination of a cycle before effluent exceeding a limiting maximum concentration of gas being adsorbed can leave the bed.

**Patentansprüche**

1. Verfahren zur Verringerung der Konzentration eines ersten Gases in einer Mischung des ersten Gases mit einem zweiten Gas unterhalb einer begrenzenden maximalen Konzentration des ersten Gases im zweiten Gas, wobei man die Gasmischung in Kontakt mit und von einem Ende zum anderen Ende eines Sorbensbettes leitet, das eine bevorzugte Affinität für das erste Gas hat, das erste Gas dort adsorbiert, um ein Abgas mit einer Konzentration des ersten Gases unterhalb des Maximums auszubilden sowie einen Konzentrationsgradienten des ersten Gases im Bett auszubilden, der bei fortschreitender Adsorption progressiv von einem Ende zum anderen Ende des Bettes abfällt und der eine sich erhöhende Konzentration des ersten Gases im zweiten Gas ausbildet, die eine Konzentrationsfront definiert, die im Bett von einem Ende zum anderen Ende progressiv fortschreitet, wenn die Sorbenskapazität hierfür abnimmt, wobei in einem Teil des Bettes das Fortschreiten der ersten Gasfront im Bett dadurch festgestellt wird, daß eine Änderung im ersten Gasgehalt des Sorbens als Funktion der Kapazität eines Kondensators bestimmt wird, von dem das Sorbens das Dielektrikum ist, und zwar an einer Stelle im Bett, die ausreichend weit weg vom Ende des Bettes entfernt ist, um zu verhindern, daß der Abfluß, der einen begrenzten maximalen Gehalt des ersten Gases hat, das Bett verläßt, worauf das Durchleiten der Gasmischung in Kontakt mit dem Bett unterbrochen wird, bevor dieses Abgas das Bett verlassen und die begrenzte maximale Konzentration des ersten Gases im zweiten Gas überschritten werden kann, dadurch gekennzeichnet, daß das Feststellen des Fortschreitens der ersten Gasfront im Bett derart vorgenommen wird, daß der Kondensator im wesentlichen die gesamte Gasströmung durch das Bett aufnimmt.

2. Verfahren nach Anspruch 1, dadurch gekennzeichnet, daß das erste Gas aus dem Bett durch Hindurchleiten eines Reinigungsstroms aus Gas mit niedriger Konzentration des ersten Gases, das mit dem Bett in Kontakt steht, desorbiert wird, worauf der Adsorptionszyklus und der Desorptionszyklus der Reihe nach wiederholt wird.

3. Verfahren nach einem der Ansprüche 1 oder 2, dadurch gekennzeichnet, daß das sorbierte erste Gas vom Bett bei einer erhöhten Temperatur entfernt wird, die ausreicht, um das erste Gas zu desorbieren und/oder das sorbierte erste Gas vom Bett bei einem Druck zu entfernen, der unter dem Druck liegt, bei dem die Adsorption vorgenommen wird.

4. Verfahren nach einem der Ansprüche 1—3, dadurch gekennzeichnet, daß das sorbierte erste Gas vom Bett bei einem Druck entfernt wird, der unter atmosphärischem Druck liegt.

5. Verfahren nach einem der Ansprüche 1—4, dadurch gekennzeichnet, daß das Hindurchleiten der gasförmigen Mischung in Kontakt mit dem Bett automatisch unterbrochen wird, wenn die Konzentrationsfront eine vorbestimmte Strecke durch das Bett zurückgelegt hat.

6. Verfahren nach einem der Ansprüche 1—5, dadurch gekennzeichnet, daß zwei Sorbensbetten verwendet werden, wobei das erste im Adsorptionszyklus des ersten Gases ist, während das andere im Desorptionszyklus zur Desorption des ersten Gases durch einen Reinigungsstrom ist, der ausströmendes Gas vom ersten Bett aufweist.

7. Verfahren nach Anspruch 6, dadurch gekennzeichnet, daß das im Desorptionszyklus befindliche Bett dem Reinigungsstrom bei Zimmertemperatur ausgesetzt wird oder daß das im Desorptionszyklus befindliche Bett dem Reinigungsstrom bei erhöhter Temperatur ausgesetzt wird, die ausreicht, um das Desorbieren des ersten Gases zu unterstützen.

8. Verfahren nach Anspruch 7, dadurch gekennzeichnet, daß das im Desorptionszyklus befindliche Bett einem Reinigungsstrom unter einem Druck ausgesetzt wird, der geringer is als derjenige für den Adsorptionszyklus.

9. Verfahren nach einem der Ansprüche 1—8, dadurch gekennzeichnet, daß das erste Gas Wasserdampf ist.

10. Vorrichtung zur Verringerung der Konzentration eines ersten Gases in einer Mischung des ersten Gases mit einem zweiten Gas unterhalb einer begrenzenden maximalen Konzentration des ersten Gases im zweiten Gas mit einem Gefäß mit einer Kammer für ein Bett eines Sorbens, das eine bevorzugte Affinität für das erste Gas hat, mit einer Zuströmleitung für die Abgabe eines zuströmenden Gases am Einlaßende des Bettes, mit einer Ausströmleitung am Auslaßende des Bettes für Abgas mit einem Kondensator mit Elektroden, deren Zwischenraum mit einem Volumen an Sorbens als das Dielektrikum gefüllt ist, dessen Veränderung im ersten Gasgehalt, festgestellt als eine Funktion der Dielektrizitätskonstante, eine Veränderung in dessen Kapazität bewirkt, ferner mit Mitteln, die auf die Veränderung der Kapazität durch Abgabe eines Signals ansprechen, wenn eine gewählte Kapazität anzeigt, daß ein gewählter erster Gasgehalt erreicht oder überschritten ist, ferner mit Mitteln zum Absperren des einströmenden Gasstroms auf das Signal hin, dadurch gekennzeichnet, daß die Elektroden das Kondensators die Form von flachen, parallelen Folien haben mit einer offenen Reihe von mindestens drei solchen flachen, parallelen Blechfolien, die alterniederend mit anderen Folien angeordnet sind, die miteinander in leitender Verbindung stehen und die im Bett im wesentlichen in Strömungsrichtung in einer Weise angeordnet sind, daß sie direkt im wesentlichen die gesamte Gasströmung durch das Bett aufnehmen, wobei das Dielektrikum das Sorbensvolumen ist.

11. Vorrichtung nach Anspruch 10, dadurch gekennzeichnet, daß der Kondensator im mittleren Teil des Bettes angebracht ist, und zwar an einem Punkt von 1/50 tel bis 2/3 der Länge des Bettes von dessen Auslaßende entfernt.

12. Vorrichtung nach Anspruch 10 oder 11, dadurch gekennzeichnet, daß die Folienleiter aus blankem Metall bestehen.

13. Vorrichtung nach Anspruch 12, dadurch gekennzeichnet, daß die Folienleiter mit einem elektrisch isolierenden Belag überzogen sind, um sie vom Sorbens zu isolieren.

14. Vorrichtung nach Anspruch 13, dadurch gekennzeichnet, daß der Isolierbelag aus einem elektrisch nicht leitenden Kunststoff besteht.

15. Vorrichtung nach einem der Ansprüche 10—14, dadurch gekennzeichnet, daß die Leiter im wesentlichen in Strömungsrichtung angeordnet sind, um einen gleichförmigen Teil der Gasströmung durch das Bett aufzunehmen.

16. Vorrichtung nach Anspruch 10, dadurch gekennzeichnet, daß das Gefäß unbeheizt ist.

17. Vorrichtung nach einem der Ansprüche 10—16, dadurch gekennzeichnet, daß Mittel vorgesehen sind, die während des Regenerierungszyklus durch den Kondensator betätigt werden, so daß das Sorbensbett abgeschaltet wird, nachdem das Sorbens regeniert wurde, und daß der Regenerierungszyklus beendet wird.

18. Vorrichtung nach einem der Ansprüche 10—17, dadurch gekennzeichnet, daß eine Vielzahl von Kondensatoren im Bett zur Feststellung des darin enthaltenen Gehalts des ersten Gases angeordnet ist, und zwar an einer Stelle des Bettes, die ausreichend vom Ausströmende desselben entfernt ist, so daß die Beendigung eines Zyklus bewirkt werden kann, bevor das Abgas eine begrenzende maximale Konzentration des Gases, des adsorbiert wird, überschreitet und das Bett verlassen kann.

**Revendications**

1. Procédé de réduction de la concentration d'un premier gaz dans un mélange de celui-ci avec un second gaz, au-dessous d'une concentration maximale limite de celui-ci dans le second gaz, qui comprend la circulation du mélange au contact d'un lit d'une matière de sorption ayant une affinité préférentielle pour le premier gaz, d'une première extrémité à l'autre du lit, l'adsorption du premier gaz sur le lit afin qu'un effluent gazeux ayant une concentration du premier gaz inférieure à la valeur maximale soit formé, et la formation d'un gradient de concentration du premier gaz dans le lit, avec diminution progressive d'une première extrémité à l'autre lorsque l'adsorption se poursuit et avec une concentration croissante du premier gaz dans le second gaz formant un front de concentration qui avance progressivement dans le lit de la première extrémité à l'autre lorsque la capacité d'adsorption de la matière de sorption diminue pour le premier gaz, la détection, dans une partie du lit, de l'avance du front du premier gaz dans le lit par détermination de la variation de la teneur en premier gaz de la matière de sorption en fonction de la capacité d'un condensateur dont la matière de sorption constitue de diélectrique, au moins en un point du lit suffisamment éloigné de l'extrémité de celui-ci pour qu'un effluent ayant une teneur maximale limite en premier gaz ne puisse pas quitter le lit, puis l'interruption de la circulation du mélange gazeux au contact du lit avant qu'un tel effluent puisse quitter le lit et que la concentration maximale limite du premier gaz dans le second puisse être dépassée, caractérisé en ce que la détection de l'avance du front du premier gaz dans le lit est effectuée de manière que le condensateur reçoive pratiquement la totalité du courant de gaz qui circule dans le lit.

2. Procédé selon la revendication 1, qui comprend la désorption du premier gaz du lit par circulation d'un courant de purge d'un gaz à faible concentration du premier gaz, au contact avec le lit, puis par répétition des cycles d'adsorption et de désorption, successivement.

3. Procédé selon l'une des revendications 1 et 2, qui comprend l'extraction du lit du premier gaz fixé par sorption, à une température élevée qui suffit à la désorption du premier gaz et/ou l'extraction du lit du premier gaz fixé par sorption à une pression inférieure à la pression à laquelle l'adsorption est effectuée.

4. Procédé selon l'une quelconque des revendications 1 à 3, qui comprend l'extraction du lit du premier gaz fixé par sorption à une pression inférieure à la pression atmosphérique.

5. Procédé selon l'une quelconque des revendications 1 à 4, dans lequel la circulation du mélange gazeux au contact du lit est interrompue automatiquement lorsque le front de concentration s'est déplacé d'une distance prédéterminée dans le lit.

6. Procédé selon l'une quelconque des revendications 1 à 5, qui comprend l'utilisation de deux lits de matière de sorption, un premier étant dans un cycle d'adsorption du premier gaz pendant que l'autre est dans un cycle de désorption du premier gaz, effectué par un courant de purge constitué d'effluent gazeux du premier lit.

7. Procédé selon la revendication 6, dans lequel le lit qui est au cours d'un cycle de désorption est soumis au courant de purge à température ambiante ou dans lequel le lit qui est au cours du cycle de désorption est soumis au courant de purge à température suffisamment élevée pour que la désorption du premier gaz soit facilitée.

8. Procédé selon la revendication 7, dans lequel le lit qui est au cours d'un cycle de désorption est soumis à un courant de purge à une pression inférieure à celle qui est utilisée pour le cycle d'adsorption.

9. Procédé selon l'une quelconque des revendications 1 à 8, dans lequel le premier gaz est la vapeur d'eau.

10. Appareil destiné à réduire la concentration d'un premier gaz dans un mélange de celui-ci avec un second gaz, au-dessous d'une concentration limite maximale du premier gaz dans le second, un réservoir ayant une chambre destinée à un lit d'une matière de sorption ayant une affinité préférentielle pour le premier gaz, une canalisation étant destinée à transmettre le gaz introduit à l'extrémité d'entrée du lit, une canalisation étant destinée à transmettre l'effluent gazeux d'une extrémité de sortie du lit, un condensateur ayant des électrodes, l'espace compris entre les électrodes étant rempli d'un volume de matière de sorption constituant le diélectrique dont la variation de la teneur en premier gaz, détectée en fonction de la constante diélectrique, provoque un changement de capacité, un dispositif étant sensible au changement de capacité et étant destiné à donner un signal lorsqu'une capacité choisie indiquant une teneur choisie en premier gaz est atteinte ou dépassée, et un dispositif étant destiné à interrompre le courant de gaz introduit à la suite de ce signal, caractérisé en ce que les électrodes du condensateur sont sous forme de conducteurs plats et parallèles sous forme de feuilles, constituant un arrangement ouvert d'au moins trois tels conducteurs plats parallèles imbriqués avec des feuilles alternées qui sont reliées en relation de conduction et qui sont disposées dans le lit pratiquement dans l'alignement du courant de manière que pratiquement tout le courant de gaz circulant dans le lit soit intercepté directement, le volume de matière de sorption constituant le diélectrique.

11. Appareil selon la revendication 10, dans lequel le condensateur est placé dans une partie centrale du lit, en un point compris entre 1/50 et 2/3 de la longueur du lit à partir de l'extrémité de sortie de celui-ci.

12. Appareil selon l'une des revendications 10 et 11, dans lequel les conducteurs sous forme de feuilles sont constitués de métal nu.

13. Appareil selon la revendication 12, dans lequel les conducteurs en forme de feuilles sont revêtus d'une couche isolante de l'électricité afin qu'ils soient isolés de la matière de sorption.

14. Appareil selon la revendication 13, dans lequel la couche isolante est une matière plastique non conductrice de l'électricité.

15. Appareil selon l'une quelconques des revendications 10 à 14, dans lequel les conducteurs sont placés pratiquement dans l'alignement du courant afin qu'ils reçoivent une partie uniforme du courant de gaz circulant dans le lit.

16. Appareil selon la revendication 10, dans lequel le récipient est sans réchauffeur.

17. Appareil selon l'une quelconque des revendications 10 à 16, comprenant un dispositif commandé par le condensateur pendant le cycle de régénération afin qu'il ferme le lit de matière de sorption après que la matière de sorption a été régénérée et interrompe le cycle de régénération.

18. Appareil selon l'une quelconque des revendications 10 à 17, comprenant plusieurs condensateurs placés dans le lit et destinés à détecter la teneur en premier gaz à l'intérieur en un point du lit suffisamment distant de l'extrémité de sortie de l'effluent pour qu'un cycle puisse être terminé avant qu'un effluent dépassant une concentration limite maximale du gaz en cours d'adsorption puisse quitter le lit.

FIG. 1

FIG.2

FIG. 3

FIG. 4